# EUROPÄISCHE PATENTSCHRIFT

(11) **EP 0 494 273 B1**
(45) Veröffentlichungstag und Bekanntmachung des Hinweises auf die Patenterteilung: **24.07.1996**
(21) Anmeldenummer: 91910064.4
(22) Anmeldetag: 28.05.1991
(51) Int. Cl.: B29C 47/20, B29C 47/06

(54) **SPEICHERKOPF FÜR EINE BLASFORMMASCHINE**
STORAGE HEAD FOR A BLOW MOULDING MACHINE
TETE D'ACCUMULATION POUR MACHINE DE MOULAGE PAR SOUFFLAGE

(30) Priorität: 01.06.1990 DE 4017699
(43) Veröffentlichungstag der Anmeldung: 15.07.1992
(73) Patentinhaber: MAUSER-WERKE GmbH, D-50321 Brühl (DE)
(72) Erfinder: LANGOS, Peter, D-5205 St. Augustin 1 (DE); LEHMANN, Manfred, D-5000 Köln 90 (DE)
(86) Internationale Anmeldenummer: EP9100984
(87) Internationale Veröffentlichungsnummer: WO9118731

(56) Entgegenhaltungen:
- EP-A- 0 279 321
- EP-A- 0 349 872
- EP-A- 0 380 015
- DE-A- 2 046 334
- DE-A- 2 239 987
- DE-A- 2 617 898
- DE-A- 3 000 444
- DE-A- 3 623 308
- FR-A- 2 354 188
- US-A- 3 966 377
- US-A- 4 548 569
- F. HENSEN ET AL 'Handbuch der Kunststoff-Extrusionstechnik, II, Extrusionsanlagen' 1989 , HANSER VERLAG , MüNCHEN siehe Seite 406; Abbildung 52

## Beschreibung

Die Erfindung bezieht sich auf einen Speicherkopf gemäß dem Oberbegriff des Anspruchs 1.

Ein Speicherkopf ist aus der DE-OS 39 02 270 bekannt. Bei diesem Speicherkopf zur diskontinuierlichen Herstellung mehrschichtiger, koextrudierter, schlauchartiger Vorformlinge aus thermoplastischem Kunststoff zur Bildung großvolumiger, mehrschichtiger Hohlkörper in einer geteilten Blasform werden mindestens zwei unterschiedliche, ringförmige Materialschmelzen mittig innerhalb des Ringkolbens nacheinander in Extrusionsrichtung zu einer mehrschichtigen Materialschmelze zusammengeführt, wonach diese mehrschichtige Materialschmelze sich trichterförmig erweiternd in einen Ringspeicherraum fließt und anschließend durch einen in axialer Richtung bewegbaren Ringkolben über einen Ringdüsenspalt aus dem Speicherkopfgehäuse ausgestoßen wird. Die für jede Schicht - dies können bis zu fünf verschiedene Schichten sein - einzeln zugeführten Kunststoff-Schmelzeströme werden über jeweils einen Ringkanal auf dem Umfang verteilt und fließen daraus über einen Ringspalt in den Speicherraum unterhalt des Ausstoßkolbens.
Ein Speicherkopf mit schräg nach unten verlaufenden Ringkanalhälften zur Umfangsverteilung des schmelzflüssigen Kunststoffmateriales ist aus der US - A - 4 548 569 bekannt. Der Oberbegriff des Anspruchs 1 basiert auf diesem Dokument. Nachteilig bei diesen Konstruktionen mit einer Umfangsverteilung über einen Ringkanal ist die Tatsache, daß auf der der Einspeisestelle gegenüberliegenden Seite, dort wo die beiden halbkreisförmigen Teilströme zusammentreffen, immer eine Schweißnaht entsteht, die sich im später erblasenen Hohlkörper als Längsnaht und damit als Schwachstelle darstellt. Bei coextrudierten mehrschichtigen Hohlkörpern werden die inneren Schweißnähte zwar von der jeweils äußeren Schicht überdeckt, sie können aber dennoch am Fertigprodukt in unerwünschter Streifenbildung erkennbar bleiben.
Bei einem aus der DE - A - 2 239 987 bekannten Speicherkopf besteht der Ausstoßkolben aus einem kegelförmigen Kern und einem, eine entsprechend sich kegelförmig verjüngende Ausnehmung aufweisenden Ringteil. Kern und Ringteil sind fest miteinander verbunden und innerhalb des Gehäuses verschiebbar auf einem zentralen Dorn gelagert. Auf dem Kern ist eine einzelne eingängige schraubenlinienförmige Nut eingeprägt. Dabei soll der Kern ausdrücklich derart eng an der Innenwandung der kegelförmigen Ausnehmung anliegen, daß ein Überströmen des thermoplastischen Materials mit Sicherheit vermieden ist. Es wird dem Leser die technische Lehre mitgeteilt, daß ein derartiges Überströmen durch relativ kleine Spalte unmittelbar vor dem Auspressen unterschiedliche Drücke auf das Material ausübt, wodurch es zu Verkrümmungen des ausgepreßten Materials kommt. Dies wird als nachteilig angesehen und soll dadurch verhindert werden, daß sich der Materialstrom nach Verlassen der Nut im Speicherraum schraubenlinienförmig flach übereinander legt und dadurch einen Schlauch bildet, bei dem die ebenfalls schraubenlinienförmigen Nähte zwischen den einzelnen Materialwürsten quer zur Ausströmrichtung liegen. Bei diesem bekannten sogenannten Staukopf findet also zwischen Ringteil und Kern mit schraubenlinienförmiger Nut keine Umfangsverteilung des thermoplastischen Materials statt; im Gegenteil soll dies in diesem Bereich der Bauteile sogar ausdrücklich unterbunden und verhindert werden.

Als Verteilerorgane zur Verteilung des vom Extruder in das Speichergehäuse zugeführten Kunststoff-Vollstranges auf einen kreisförmigen Umfang sind bisher z.B. Ringkanäle oder Herzkurven-Verteiler bekannt und üblich. Dabei müssen jedoch verschiedene Kunststoff-Moleküle bzw. -Partikel unterschiedlich lange Fließwege zurücklegen. Die Zusammenflußstellen der einzelnen Kunststoff-Ströme können in nachteiliger Weise als entsprechende Zusammenfluß-Längsnähte in blasgeformten Artikeln erkennbar sein. Dies mindert die Produktqualität.

Es ist Aufgabe der vorliegenden Erfindung, einen neuartigen Speicherkopf für eine Blasformmaschine zur diskontinuierlichen Herstellung von insbesondere großvolumigen Kunststoff-Hohlkörpern anzugeben, der rheologisch gleiche Fließbedingungen für alle Kunststoff-Partikel bei der Zuführung des schmelzflüssigen Kunststoffstromes zu den Verteilerorganen und in den Verteilerorganen selbst aufweist, und der eine verbesserte Überlappung und Umfangsverteilung der Schmelzeströme im Verteilerorgan bei gleichzeitiger Erhöhung der Durchsatzleistung bzw. Produktionsgeschwindigkeit der Blasformmaschine ermöglicht.

Diese Aufgabe wird erfindungsgemäß mit dem Speicherkopf nach Anspruch 1 gelöst.

Bei einer Ausgestaltung der Erfindung erfolgt die Einspeisung der Kunststoffschmelzen von den Extrudern mittels einer als Mehrkanalsystem ausgeführten Stegpinole. Dabei werden die einzelnen Kunststoffschmelzen jeweils von einem axialen Zentralstrom (Hauptstom) auf mehrere sternförmig nach außen führende Radialbohrungen (Teilströme) aufgeteilt. Die zentrale separate Einspeisung und die symmetrisch zur Fließrichtung nachgeschalteten Schmelzeverteiler (Wendelkanäle) gewährleisten eine vollständig symmetrische Umfangsverteilung der Kunststoff-Schmelzeströme bis zum Speicherraum des Kopfspeichers, wo sich die einzelnen umfangsverteilten Kunststoff-Schichten zu einem einzigen mehrschichtigen Kunststoff-Schlauch vereinigen. Dabei besitzt jedes Kunststoffpartikel an jeder Stelle am Umfang des koextrudierten Artikels unabhängig von der Durchsatzleistung des Extruders bzw. des Speicherkopfes ein und dieselbe rheologische Fließgeschichte. Diese Tatsache hat zur Folge, daß die Rundumverteilung völlig symmetrisch ausgebildet ist.

In einer bevorzugten Ausgestaltung der Erfindung ist vorgesehen, daß die axiale Länge eines jeden Verteilerorganes bzw. der einzelnen Wendelkanäle in Längsrichtung etwa gleichgroß wie sein jeweiliger Kreisdurchmesser ist, wobei wenigstens zwei oder mehr gleichmäßig auf dem Umfang des Verteilerorganes verteilte Wendelkanäle vorgesehen sind und die separaten Kunststoffschmelzeströme zunächst jeweils zentral durch eine Axialbohrung als Hauptstrom innerhalb der Pinole zugeführt und die einzelnen Wendelkanäle dann jeweils über sternförmig angeordnete radial verlaufende Bohrungen als Teilströme mit der Zentralbohrung in Verbindung stehen und mit Kunststoffschmelze versorgt werden. Der Wendelkanalverteiler läßt sich mit einem auf einer Außenwandung (z.B. der Pinole, des Ausstoßkolbens oder einer zusätzlichen Hülse) oder an einer Innenwandung (z.B. des Ausstoßkolbens, einer zusätzlichen Hülse bzw. eines zylinderförmigen Rohrstückes oder der Speicherkopfgehäuseinnenwandung) aufgebrachten mehrgängigen Gewinde bzw. Wendelkanal bestimmter Steigung vergleichen. Die Wendelkanäle werden einzeln eingespeist und ihre Tiefe nimmt in Fließrichtung stetig ab. Dadurch werden die in den Wendeln vorhandenen Kunststoffströmungen allmählich in axiale Strömungen überführt. Die axialen Strömungen bilden sich im größer werdenden Ringspalt zwischen dem Wendelkanalverteiler und der ihn abdeckenden Hülse aus. Die axial abfließenden Schmelzströme der einzelnen Wendelkanäle überlappen jeweils als sichelförmige Umfangsfläche die darunter fließenden axialen Umfangsströme und die in den Wendelkanälen fließenden Rest-Schmelzeströme. Die Einspeisung der einzelnen Wendelkanäle erfogt wie schon erwähnt, über eine Zentralbohrung in der Pinole, die je nach Anzahl der Wendelkanäle sternförmig nach außen auf die einzelnen Wendein aufgeteilt wird.

Ein wesentliches Merkmal der Erfindung ist, daß die Verteilerorgane als zylinderförmige Wendelkanalverteiler (Ringspalte) ausgebildet sind. Die Kombination der Wendelkanalverteiler mit der jeweils zentralen Einspeisung der einzelnen Kunststoff-Schmelzeströme bietet ganz entscheidende Vorteile:
Durch die zentrale Einspeisung wird eine rheologisch gleiche Fließgeschichte für alle Kunststoff-Partikel gewährleistet, mit dem Wendelkanalverteiler wird eine weitreichende Überlappung der Schmelzeströme mit jeweils nur einem Schmelzeverteiler erreicht.

Mit dem erfindungsgemäßen Speicherkopf mit Wendelkanalverteiler ist im Vergleich zu herkömmlichen Speicherköpfen mit z.B. Ringkanalverteiler oder Herzkurvenverteiler eine Erhöhung der Durchsatzleistung - z.B. bei einem 20 l-Kopfspeicher von ca. 650 kg/h auf ca. 800 kg/h - und eine Verbesserung der Rundumverteilung des Kunststoffmateriales erreichbar.
Einer Steigerung der Durchsatzleistung bei einem bekannten Schmelzeverteiler, bei dem der Ausstoßkolben des Kopfspeichers das Kunststoffmaterial über Herzkurven verteilt, sind natürliche Grenzen gesetzt, die sich bei Überschreitung in verminderter Produktqualität wie z.B. in partiellen Dünnstellen oder Längsnähten im Artikel zeigen.

Bei dem erfindungsgemäßen Koextrusions-Kopfspeicher besteht der Ausstoßkolben aus mehreren zylinderförmigen Hülsen bzw. Rohrstücken, wobei jedes Rohrstück auf der Aussenfläche einen Wendelkanalverteiler erhält und die Innenfläche des Rohrstückes gleichzeitig als ortsfeste Abdeckung für den innenliegenden nächsten Wendelkanalverteiler dient. Der äußerste Wendelkanalverteiler ist zur Vermeidung von auf die Kunststoffschmelze wirkenden Scherkräften durch Anhaftung an der relativ-beweglichen Gehäuseinnenwandung zweckmäßigerweise mit einer dünnen am Ausstoßkolben befestigten Blechhülse abgedeckt.
Bei einem Ausführungsbeispiel als Dreischicht-Koextrusions-Speicherkopf ist vorgesehen, daß drei separate Extruder ihre Kunststoffschmelze in unterschiedlicher Höhe über die jeweils zentralmittigen Zuführungsbohrungen in der Pinole für die einzelnen Wendelkanalverteiler einspeisen. Dabei lassen sich unterschiedliche Kunststoffe auch ohne Haftvermittler verbinden.
So kann die innere Schicht eines dreischichtigen Vorformlinges aus hochwertigem lebensmittelechtem neuem Kunststoffmaterial wie z.B. HDPE bestehen - oder zur Befüllung mit gefährlichen Flüssigkeiten diffusionssperrende Zusätze (z.B. Celar-Plättchen) aufweisen -, während die dickere mittlere Schicht als Stützschicht aus wiederaufgearbeitetem Recycling-Regranulat ausgebildet ist und die dritte äußere Schicht als Farbstoffträger wiederum aus mit Farbpigmenten versetztem Neumaterial besteht. Bei der Verwendung von nur zwei Extrudern für einen dreischichtigen Vorformling besteht die mittlere Schicht zweckmäßigerweise wieder aus Füllstoff-Regranulat, während die innere und äußere Schicht aus nur einem Extruder mit Kunststoffschmelze versorgt werden und aus Neumaterial bestehen.

Mit dem erfindungsgemäßen Wendelkanalverteiler werden folgende Vorteile erzielt:
- weitreichende flächige Überlappung der einzelnen Schmelzeströme mit nur einem Schmelzeverteilerorgan,
- Überlappungslänge über den halben Umfang (180°) hinaus bis zu etwa 240° möglich (wichtig für die Verschweißung der Einzelströme); dies führt bei einer Ausführung mit z.B. 6 Wendeln und 240° Überlappungslänge zu einer Vierfach-Überlappung in einer einzigen Schicht,
- für alle Einzelströme gelten gleiche rheologische Fließeigenschaften,
- da jeder Wendelkanal einzeln (Teilstrom) angespeist wird, ist mit einem mit Wendelkanälen ausgestatteten Speicherkopf eine schnellere und bessere Umfangsverteilung und damit eine erhebliche Steigerung der Durchsatzleistung erzielbar.

Die Erfindung wird nachfolgend anhand von in den Zeichnungen schematisch dargestellten Ausführungsbeispielen näher erläutert und beschrieben. Es zeigen:
- Figur 1: einen erfindungsgemäßen Speicherkopf zur Herstellung eines zweischichtigen, koextrudierten Hohlkörpers,
- Figur 2: einen zweiten erfindungsgemäßen Speicherkopf zur Herstellung eines dreischichtigen coextrudierten Hohlkörpers,
- Figur 3: einen dritten erfindungsgemäßen Speicherkopf und
- Figur 4 bis Figur 6: verschiedene Querschnitte (gesprungen - höhenversetzt) des Speicherkopfes gemäß Fig. 3.

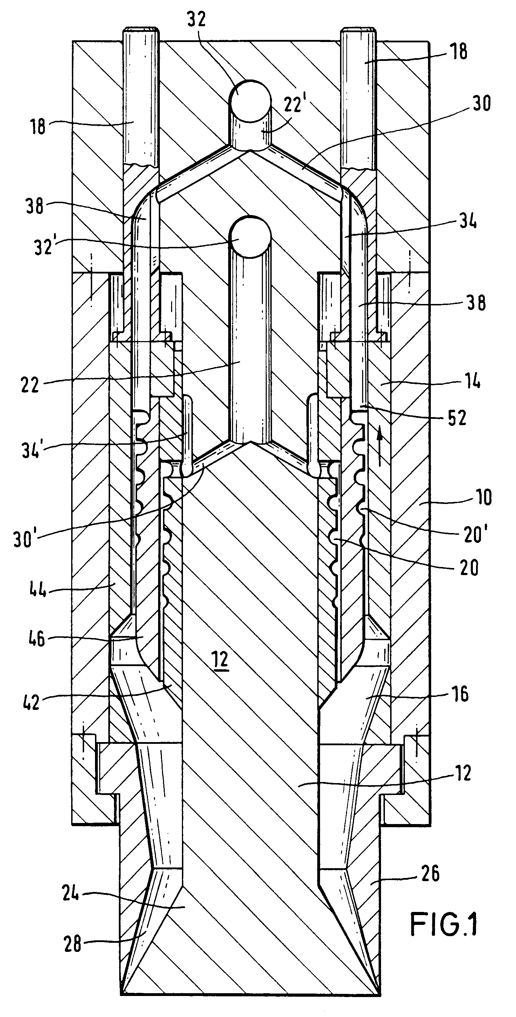

In Figur 1 ist mit der Bezugsziffer 10 das Gehäuse eines Speicherkopfes (Akkukopf) für eine Blasformmaschine bezeichnet. Zentral in dem Speicherkopfgehäuse 10 ist eine zylinderförmige Pinole 12 angeordnet. Auf der Pinole 12 ist ein Ausstoßkolben 14 mittels hydraulisch betätigbarer Druckbolzen 18 verschiebbar gelagert. Außenseitig schließt der Ausstoßkolben 14 bündig dicht mit der Innenwandung des Speicherkopfgehäuses 10 ab. Unterhalb des Ausstoßkolbens 14 (Ringkolben) ist zwischen Pinole 12 und Gehäuse 10 ein Speicherraum 16 zum Zwischenspeichern der umfangsverteilten Kunststoffschmelze ausgebildet.
Die sich im Speicherraum 16 ansammelnde mehrschichtige Kunststoffschmelze hebt den Ausstoßkolben 14 langsam aber stetig in seine obere Ausstoßposition. Wenn der Speicherraum 16 gefüllt ist, wird die zwischengespeicherte Kunststoffschmelze vom herunterfahrenden Ausstoßkolben 14 durch eine unten zwischen zentralem Düsenkern 24 und äusserem Düsenringteil 26 ausgebildete Ringspaltdüse 28 als schlauchförmiger Vorformling in eine darunter angeordnete geöffnete Blasform ausgestoßen bzw. koextrudiert.

Bei der Darstellung in Fig. 1 befindet sich der Ausstoßkolben 14 gerade in seiner tiefsten Position (Ausstoßposition). Der Ausstoßkolben 14 besteht erfindungsgemäß aus drei sich konzentrisch umschließenden Rohrstücken 42,44,46, die jeweils fest miteinander verbunden sind. Auf der Oberfläche des inneren Rohrstückes 42 und des mittleren Rohrstückes 46 sind jeweils Verteilerorgane mit jeweils wenigstens vier umfangsverteilten Wendelkanälen ausgebildet. Das äußere Rohrstück 44 dient hier lediglich als Abdeckhülse für den äußeren Wendelkanalverteiler.

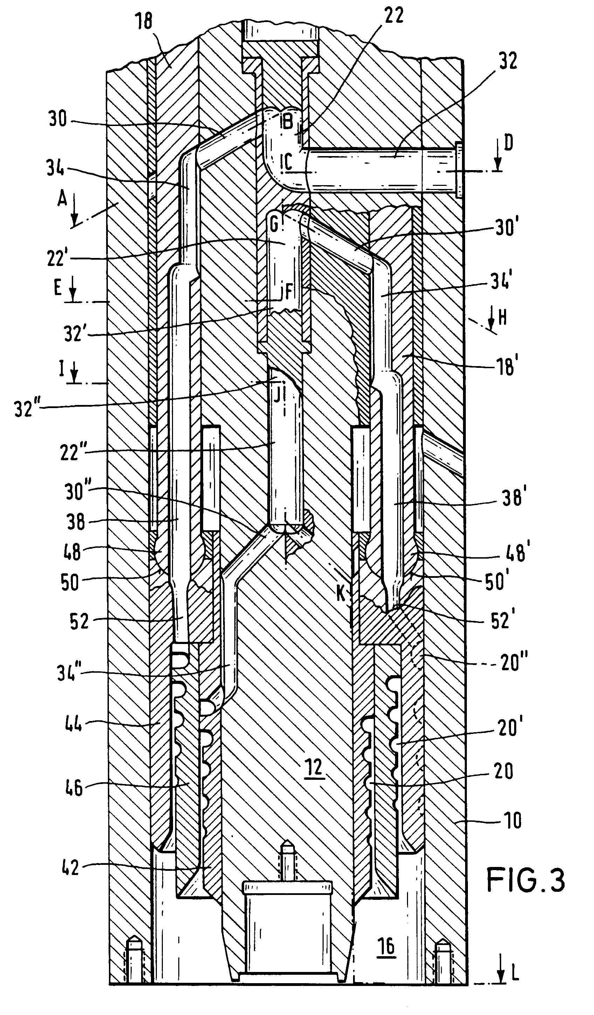

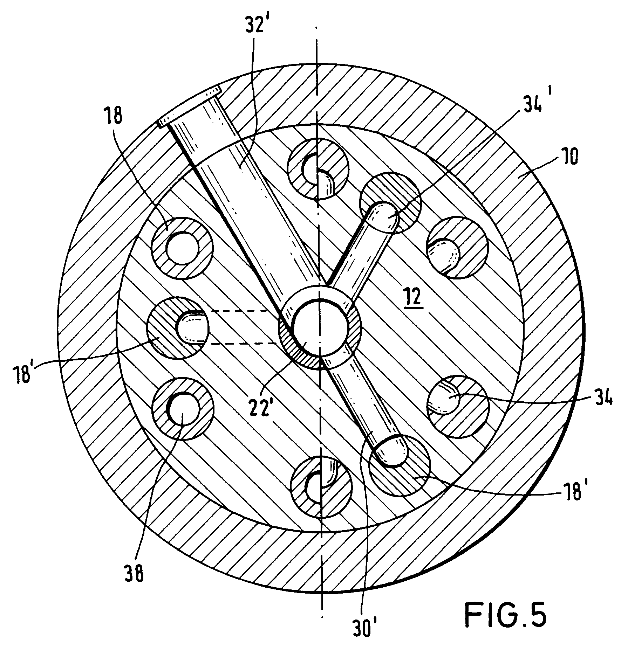

Zwei flüssige Kunststoffschmelzen gelangen jeweils über eine radial verlaufende Zuleitung (Bohrung) 32 von den beiden Extrudern zentralmittig in die Pinole 12. Dort werden die Schmelzeströme in eine Axialbohrung 22, 22' umgelenkt. Die Längen der jeweiligen Zentralbohrungen 22,22' in der Pinole 12 sind wenigstens einmal so lang, vorzugsweise jedoch etwa dreimal so lang wie der Durchmesser der Bohrung 22, 22' selbst, ausgebildet.
Von den Zentralbohrungen 22, 22' werden die Hauptschmelzeströme über eine Vielzahl von sternförmig verlaufenden Radialbohrungen 30, 30' in einzelne Teilströme aufgeteilt, die an die einzelnen Wendelnuten der jeweiligen Wendelkanalverteiler herangeführt werden. Der Übergang der jeweiligen Kunststoffschmelze-Teilströme von der feststehenden Pinole 12 über die Radialbohrungen 30 auf den beweglichen Ausstoßkolben 14 erfolgt zur Überbrückung der Hubbewegung jeweils über eine Längsnut.
Gemäß einem Merkmal der Erfindung ist wenigstens einer der sich an den Ausstoßkolben 14 anschließenden und für die Axialbewegung des Ausstoßkolbens 14 vorgesehenen Druckbolzen 18 hohl ausgebildet bzw. mit einer Axialbohrung 38 versehen und wird als Zuführungsleitung zur Zuführung von Kunststoffschmelze in ein Verteilerorgan verwendet. Im vorliegenden Fall sind von sechs Druckbolzen lediglich drei Stück hohl ausgebildet. Jeweils ein Teilstrom aus einer Radialbohrung 30 wird über eine Längsnut 38 im hohlen Druckbolzen 18 in eine Zuleitung 52 in den Ausstoßkolben 14 weitergeleitet.
Jede Zuleitung 52 ist in Umfangsrichtung noch einmal gegabelt (in zwei Teilströme aufgeteilt) und versorgt jeweils zwei benachbarte Wendelkanäle mit Kunststoffschmelze, so daß hier über drei hohle Druckbolzen 18 sechs einzelne Wendelkanäle des äußeren Wendelkanalverteilers 20' eingespeist werden.
Der innere Wendelkanalverteiler 20 wird über direkt in der Pinolenaußenwandung angeordnete Längskanäle 34' mit Kunststoffschmelze versorgt. Die einzelnen umfangsverteilten Kunststoffströme treten jeweils stirnseitig aus dem Ausstoßkolben bzw. den einzelnen Verteilerorganen als dünne Schlauchschichten aus und vereinigen sich im Speicherraum 16 zu einem mehrschichtigen rohrförmigen Kunststoffstreng, der diskontinuierlich aus der Ringspaltdüse 28 ausgestoßen bzw. koextrudiert wird.

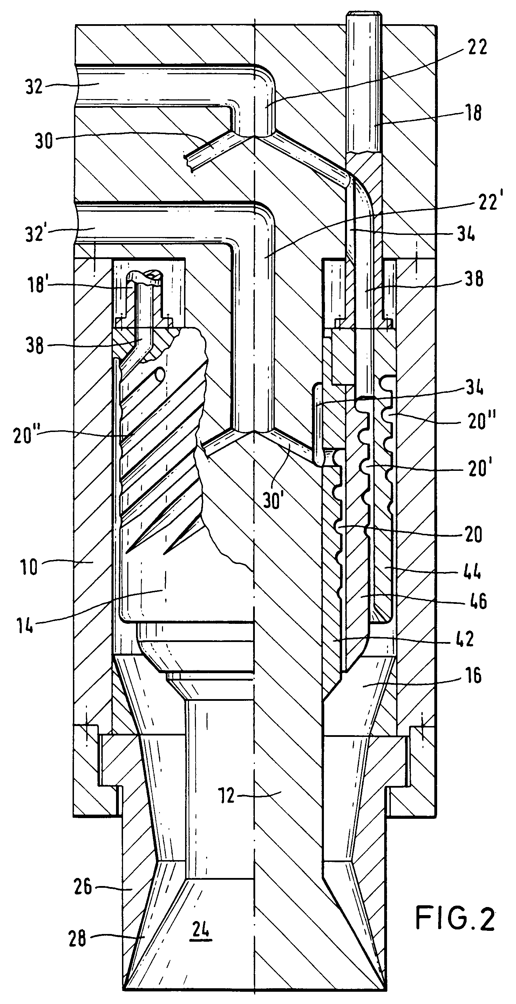

In Figur 2 ist ein Dreischicht-Koextrusionskopf dargestellt. Über die radiale Bohrung 32 bzw. die sich daran anschließende Axialbohrung 22 in der Pinole 12 werden über die sich weiterhin anschließenden Radialbohrungen 30 (Teilströme) jeweils die hohl ausgebildeten Druckbolzen 18 und 18' (über Längsnuten 34) aus einem Extruder mit Kunststoffschmelze versorgt. Hieran anschließend wird jedoch der Wendelkanalverteiler 20' auf dem mittleren Rohrstück 46 über drei hohle Druckbolzen 18 versorgt, während der Wendelkanalverteiler 20'' auf dem äußeren Rohrstück 44 über drei weitere hohle Druckbolzen 18' mit Kunststoffschmelze versorgt wird. Auch durch diese erfindungsgemäße Maßnahme kann aus einem entsprechend groß ausgelegten Extruder ein Kunststoffmaterial über zwei Verteilerorgane gleichzeitig in zwei Schichten viel schneller und besser mit wesentlich höherer Durchsatzleistung gleichmäßig auf den Umfang verteilt werden.
In dem Teilschnitt auf der linken Zeichnungshälfte ist der Wendelkanalverteiler 20'' dargestellt, der zur Vermeidung von Schwerwirkung zweckmäßigerweise noch durch eine zeichnerisch nicht dargestellte dünne Blechhülse abgedeckt ist. Wichtig für die konstruktive Ausgestaltung der Wendelkanalverteiler ist, daß die einzelnen Wendeln mit Abstand voneinander angeordnet sind, wobei der mittlere Abstand etwa die gleiche axiale Breite wie die Breite einer Wendelnut aufweist, und daß die Breite der Wendelnuten mit zunehmender Länge langsam aber stetig abnimmt und der dazwischenliegende zylindrische Bereich entsprechend zunimmt bzw. breiter wird, wobei die Wendelnuten seitlich durch definierte Kanten begrenzt sind und die untere Kante bzw. die sich nach unten anschließende Zylinderfläche immer gegenüber der oberen Kante ein wenig zurückversetzt ausgebildet ist.
Dabei weisen die Wendelkäle zumindest an ihrem Anfang einem halbkreisförmigen Querschnitt auf und mit zunehmender Länge der Wendeln wird dieser halbkreisförmige Querschnitt immer flacher bzw. die Tiefe der Wendeln nimmt immer mehr ab.
Die Darstellung gemäß Figur 3 verdeutlicht die zentralaxiale Zuführung und Verteilung der Teilströme von drei verschiedenen Kunststoff-Hauptströmen auf drei Wendelkanalverteiler (Dreischicht-Koextrusion). Nur hierdurch werden für alle Kunststoffpartikel in den jeweiligen Kunststoffströmen gleiche rheologische Fließbedingungen geschaffen. Um die Bauhöhe eines derartigen Speicherkopfes nicht unnötigerweise lang ausbilden zu müssen, kann es zweckmäßig sein, wenn bei wenigstens einer Zentralbohrung 22 die Zuführung der Kunststoffschmelze vom Extruder über die radial verlaufende Bohrung 32 (Hauptstrom) auf der dem Ausstoßkolben 16 zugewandten Seite angeordnet ist und die zu den Wendelkanälen führenden sternförmigen Radialbohrungen 30 auf der dem Ausstoßkolben 16 abgewandten Seite angeschlossen sind, so daß die Kunststoffschmelze in dieser Zentralbohrung 22 in einer der Ausstoßrichtung entgegengesetzten Fließrichtung geführt ist.
Dies ist hier bei der in der Mitte angeordneten Zentralbohrung 22' ausgeführt, deren anschließende Radialbohrungen 30' oben einmünden und die Teilströme über die hohlen Druckbolzen 18' zu einem auf der Außenhülse 44 (zeichnerisch der Einfachheit halber nur angedeuteten) angeordneten Wendelkanalverteiler 20'' in dessen sechs einzelne Wendelkanäle einfließen lassen. (Düsenkern 24, Düsenringteil 26 mit dazwischenliegender Ringspaltdüse 28 sind hier ebenfalls nicht dargestellt.) Die Teilströme aus den Zuführungsbohrungen 38' der drei hohlen Druckbolzen 18' sind in den Zuführungsleitungen 52' noch einmal aufgeteilt bzw. gegabelt und können so jeweils zwei benachbarte Wendeln anspeisen.
Als weiteres erfindungsgemäßes Merkmal ist in Fig. 3 erkennbar, daß die Verbindung bzw. Anbindung zwischen hohlem Druckbolzen 18 als Kunststoff-Zuführungsleitung und Kopfbereich des Ausstoßkolbens 16 als kugelkalottenförmiges Verbindungsglied mit Kugelkalotten-Kopf 48 und Kugelkalotten-Schale 50 ausgebildet ist.
Dabei ist zweckmäßigerweise das untere Ende des Druckbolzens 18 als Kugelkalotten-Kopf 48 ausgebildet, während die entsprechende Kugelkalotten-Schale 50 oben im Kopfbereich des Ausstoßkolbens ausgebildet ist. Prinzipiell wäre diese Anbindung natürlich auch in umgekehrter Ausführung möglich. Dies dient in einfacher Weise dem Ausgleich von Toleranzen und Thermospannungen zwischen den langen beweglich ausgeführten Druckbolzen und dem anschließenden Ausstoßkolben sowie den äußeren feststehenden Gehäuse-Bauteilen. Da die Druckbolzen 18 im wesentlichen nur mit Druckbelastungen beaufschlagt werden, kann der Kugelkopf 48 der Druckbolzen einfach mittels halbschalenförmiger Ringstücke auf dem Ausstoßkolben befestigt werden.
Bei einem mehrschichtigen Koextrusionskopf können bei wenigstens zwei benachbarten Verteilerorganen mit Wendelkanälen die Wendelrichtungen bzw. Wendelverläufe der Wendelkanäle unterschiedlich, das heißt entgegegesetzt rechtsgängig und linksgängig ausgebildet sein.
Hierdurch kann eine sich kreuzende Überlappung einzelner Umfangsschichten mit einer Festigkeitserhöhung z.B. gegen Innendruckbelastungen des erblasenen Hohlkörpers erreicht werden.

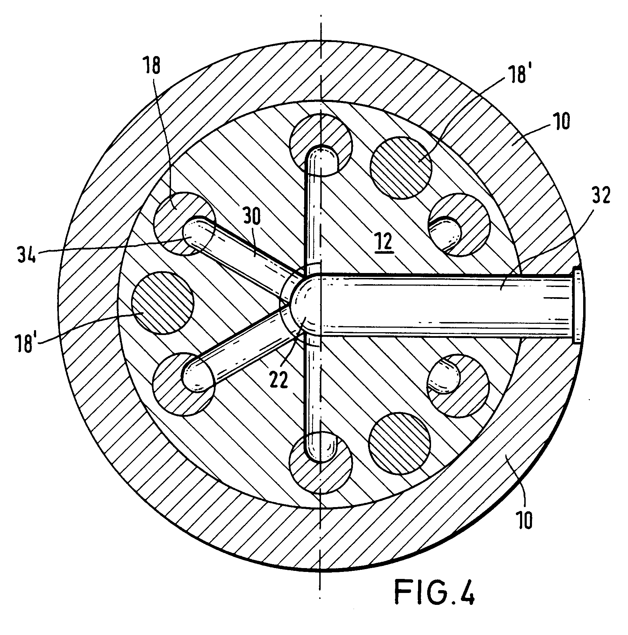

In Figur 4 ist ein Querschnitt durch den oberen Teil des Speicherkopfes gemäß der gesprungenen Ebene A-B-C-D in Fig. 3 dargestellt. Die vom Extruder zugeführte Kunststoffschmelze gelangt über die radiale Einspeisebohrung 32 in die zentralmittig in der Pinole 12 angeordnete Axialbohrung 22. Zum Druckausgleich aufgrund der Umlenkung von der Bohrung 32 sollte die Axialbohrung 22 etwa die dreifache Länge ihres Durchmessers aufweisen. Von der Axialbohrung 22 gelangen die Teilströme über die sternförmigen Radialbohrungen 30 in die in den sechs Druckbolzen 18 seitlich angeordneten Längsnuten 34 (zum Hubausgleich) und von dort über die Längsbohrungen 38 in den Druckbolzen 18 an die einzelnen Wendelkanäle. Hier sind die symmetrisch dazwischen angeordneten weiteren Druckbolzen 18' noch voll ausgebildet.
Der Querschnitt in Figur 5 verläuft in der gesprungenen Ebene E-F-G-H in Fig. 3. Hier gelangt der Kunststoffstrom durch die radiale Einspeisebohrung 32' vom Extruder unten in die Axialbohrung 22' und fließt von unten nach oben durch die oben in die Axialbohrung 22' einmündenden Radialbohrungen 30' über die Längsnuten 34' in die hohlen Druckbolzen 18'. Der Übergang von Druckbolzen-Bohrung 38' auf die Zuleitung 52' im Ausstoßkolben 14 erfolgt wie bereits geschildert über eine Kugelkalottenkopf-Anbindung 48', 50'. Die drei Zuleitungen 52' sind noch einmal gegabelt und münden in sechs Wendelkanäle. In der linken Zeichnungshälfte Fig. 5 sind die Zuführungsbohrungen 38 in den Druckbolzen 18 erkennbar, während in der rechten Zeichnungshälfte noch die Längsnuten 34 geschnitten sind.

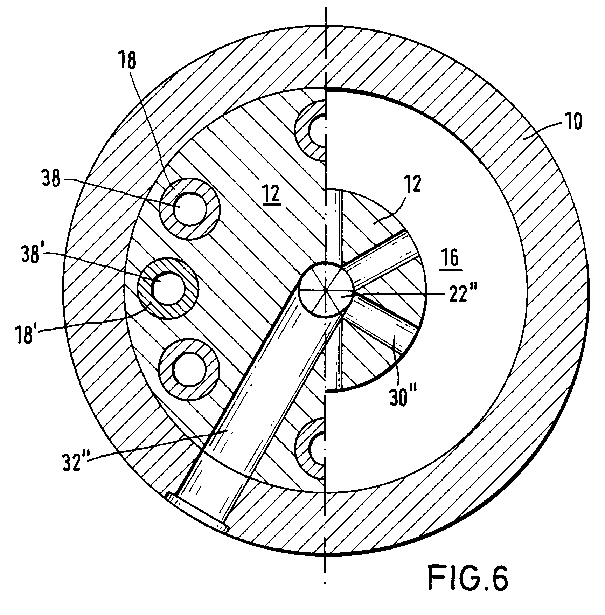

In Figur 6 ist die Schnittebene I-J-K-L aus Fig. 3 dargestellt. In der linken Zeichnungshälfte sind die benachbarten Druckbolzen 18, 18' mit ihren Zuführungsbohrungen 38, 38' erkennbar. Die Axialbohrung 22'' wird über die Radialbohrung 32'' von einem dritten Extruder angespeist und verteilt sechst Teilströme über die kleineren Radialbohrungen 30'' über Längsnuten 34'' in der Pinole 12 an die einzelnen Wendelnuten des inneren Wendelkanalverteilers 20.
Die in den verschiedenen Ausführungsformen gezeigten konstruktiven Merkmale sind beliebig austauschbar. Mit den erfindungsgemäßen Ausführungsformen eines Speicherkopf-Gehäuses mit Wendelkanalverteiler sind Kunststoff-Hohlkörper mit verbesserter Produktqualität bei erhöhter Produktionsgeschwindigkeit herstellbar.

## Patentansprüche

1. Speicherkopf für eine Blasformmaschine zur diskontinuierlichen Herstellung von mehrschichtigen Kunststoff-Hohlkörpern mit wenigstens zwei an das Speicherkopfgehäuse (10) angeschlossenen Extrudern zur Einspeisung von wenigstens zwei schmelzflüssigen Kunsttoff-Schmelzen in den Speicherkopf, mit einer zentral angeordneten Pinole (12) und wenigstens zwei voneinander unabhängigen, die Pinole (12) konzentrisch umschließenden Verteilerorganen zur Umfangsverteilung der Kunststoffschmelzen und Zuführung in einen ringförmigen Speicherraum (16) unterhalb eines Ausstoßkolbens (14), der mittels Druckbolzen (18) axial verschiebbar im Speicherkopfgehäuse (10) gelagert ist und mittels dem die im Speicherraum (16) gespeicherte Kunststoffschmelze durch einen sich unten an den Speicherraum (16) anschließenden ringförmigen Düsenspalt (28) ausstoßbar ist, wobei der Ausstoßkolben (14) aus wenigstens zwei sich konzentrisch umschließenden Rohrstücken (42, 46) besteht und jedem der Rohrstücke (42, 46) ein separates Verteilerorgan zugeordnet ist,
**dadurch gekennzeichnet,** daß
die Verteilerorgane jeweils als auf der Außenwandung der Rohrstücke (42, 46) des axial verschiebbaren Ausstoßkolbens (14) angeordnete zylinderförmige Wendelkanalverteiler (20) ausgebildet sind, die jeweils wenigstens vier oder mehr gleichmäßig über den Umfang verteilte Wendelkanäle aufweisen, wobei mit zunehmender Länge der Wendelkanäle die Tiefe der Wendelkanäle in Fließrichtung stetig immer mehr abnimmt, wobei die Wendelkanäle einzeln mit Teilströmen an schmelzflüssiger Kunststoff-Schmelze aus dem Hauptschmelzestrom der angeschlossenen Extruder eingespeist werden, und wobei für alle Kunststoffpartikel in den jeweiligen Kunststoff-Teilströmen gleiche rheologische Fließbedingungen geschaffen sind.

2. Speicherkopf nach Anspruch 1,
**dadurch gekennzeichnet,** daß
die axiale Länge eines jeden Verteilerorganes (20) bzw. der einzelnen Wendelkanäle etwa gleich groß wie sein jeweiliger Kreisdurchmesser ist.

3. Speicherkopf nach Anspruch 1 oder 2,
**dadurch gekennzeichnet,** daß
die einzelnen Wendeln mit Abstand voneinander angeordnet sind, wobei der mittlere Abstand etwa die gleiche axiale Breite wie die Breite einer Wendelnut aufweist, und daß die Breite der Wendelnuten mit zunehmender Länge langsam aber stetig abnimmt und der dazwischenliegende zylindrische Bereich entsprechend zunimmt bzw. breiter wird, wobei die Wendelnuten seitlich durch definierte Kanten begrenzt sind und die untere Kante bzw. die sich nach unten anschliessende Zylinderfläche immer gegenüber der oberen Kante ein wenig zurückversetzt ausgebildet ist.

4. Speicherkopf nach Anspruch 1, 2 oder 3,
**dadurch gekennzeichnet,** daß
die Wendelkanäle zumindest an ihrem Anfang einen halbkreisförmigen Querschnitt aufweisen und mit zunehmender Länge der Wendeln dieser halbkreisförmige Querschnitt immer flacher wird bzw. die Tiefe der Wendeln immer mehr abnimmt.

5. Speicherkopf nach Anspruch 1, 2, 3 oder 4,
**dadurch gekennzeichnet,** daß
die separaten Kunststoffschmelzeströme von den wenigstens zwei Extrudern zunächst jeweils über eine im wesentlichen radial verlaufende Bohrung (32) in die Pinole (12) geführt sind und daran anschließend jeweils zentral mittig durch eine Axialbohrung (22) (Hauptstrom) innerhalb der Pinole (12) weitergeführt sind und die einzelnen Wendelkanäle dann jeweils über sternförmig angeordnete radial verlaufende Bohrungen (30) (Teilströme) mit der Zentralbohrung (22) in Verbindung stehen und mit Kunststoffschmelze versorgt werden.

6. Speicherkopf nach Anspruch 5,
**dadurch gekennzeichnet,** daß
die Länge der jeweils axialen Bohrungen (22) zentralmittig in der Pinole (12) wenigstens einmal so lang ist, vorzugsweise etwa dreimal so lang ist, wie der Durchmesser der Bohrung (22) selbst.

7. Speicherkopf nach Anspruch 5 oder 6,
**dadurch gekennzeichnet,** daß
bei wenigstens einer Zentralbohrung (22) die Zuführung der Kunststoffschmelze vom Extruder über die radial verlaufende Bohrung (32) (Hauptstrom) auf der dem Ausstoßkolben (16) zugewandten Seite angeordnet ist und die zu den Wendelkanälen führenden sternförmigen Radialbohrungen (30) auf der dem Ausstoßkolben (16) abgewandten Seite angeschlossen sind, so daß die Kunststoffschmelze in dieser Zentralbohrung (22) in einer der Ausstoßrichtung entgegengesetzten Fließrichtung geführt ist.

8. Speicherkopf nach einem der vorhergehenden Ansprüche 1 bis 7,
**dadurch gekennzeichnet,** daß
wenigstens einer der sich oben an den Ausstoßkolben (16) anschließenden Druckbolzen (18) für die Axialverschiebung des Ausstoßkolbens (16) hohl ausgebildet ist und zur Zuführung der Kunststoffschmelze in ein Verteilerorgan (20) verwendet wird.

9. Speicherkopf nach Anspruch 8,
**dadurch gekennzeichnet,** daß
die Verbindung bzw. Anbindung zwischen hohlem Druckbolzen (18) als Kunststoff-Zuführungsleitung und Kopfbereich des Ausstoßkolbens (16) als kugelkalottenförmiges Verbindungsglied mit Kugelkalotten-Kopf (48) und Kugelkalotten-Schale (50) ausgebildet ist.

10. Speicherkopf nach einem der vorhergehenden Ansprüche 1 bis 9,
**dadurch gekennzeichnet,** daß
bei wenigstens zwei benachbarten Verteilerorganen mit Wendelkanälen die Wendelrichtungen bzw. Wendelverläufe der Wendelkanäle unterschiedlich, das heißt entgegensetzt rechtsgängig und linksgängig ausgebildet sind.

11. Speicherkopf nach einem der vorhergehenden Ansprüche 1 bis 10,
**dadurch gekennzeichnet,** daß
zur Ausbildung eines mehrschichtigen Kunststoff-Schlauches für jede Schicht des Vorformlinges ein Verteilerorgan mit Wendelkanälen vorgesehen ist, die aus wenigstens zwei Extrudern angespeist werden, wobei der Ausstoßkolben (14) mehrteilig aus konzentrischen Zylinderhülsen bzw. Rohrstücken (42,44,46) ausgebildet ist und zwischen den einzelnen Zylinderhülsen (42,44,46) jeweils ein Wendelkanalverteiler (20) angeordnet ist, dessen Wendeln jeweils in die Aussenwandung eines jeden Rohrstückes (42,44,46) eingearbeitet sind.

## Claims

1. Storage head for a blow moulding machine for the intermittent production of laminated hollow plastic articles with at least two extruders connected to the storage head casing (10) for introducing at least two molten plastics materials into the storage head, with a centrally arranged sleeve (12) and at least two distributing members which are independent of one another and concentrically surround the sleeve (12) for the peripheral distribution of the molten plastics materials and supply into an annular storage chamber (16) below an ejection piston (14) which is mounted axially displaceably in the storage head casing (10) by means of studs (18) and can be ejected through an annular nozzle gap (28) connected to the bottom of the storage chamber (16) by means of the molten plastics material stored in the storage chamber (16), the ejection piston (14) consisting of at least two lengths of tube (42, 46) which surround one another concentrically and a separate distributing member being allocated to each of the lengths of tube (42, 46), characterized in that the distributing members are designed as respective cylindrical helical channel distributors (20) which are arranged on the external wall of the lengths of tube (42, 46) of the axially displaceable ejection piston (14) and each comprise at least four or more helical channels distributed uniformly round the periphery, the depth of the helical channels continuously decreasing in the direction of flow as the length of the helical channels increases, the helical channels being fed individually with partial streams of molten plastics material from the main stream of melt from the connected extruder and identical rheological conditions of flow being created for all plastics particles in the respective partial streams of plastics.

2. Storage head according to Claim 1, characterized in that the axial length of each distributing member (20) or of the individual helical channels is substantially equal to its respective diameter.

3. Storage head according to Claim 1 or 2, characterized in that the individual helices are spaced from one another, the average spacing having roughly the same axial width as the width of a helical groove, and in that the width of the helical grooves decreases slowly but continuously as the length increases and the intermediate cylindrical region increases and widens accordingly, the helical grooves being limited laterally by defined edges and the lower edge or the cylinder face connected at the bottom invariably being set back slightly from the upper edge.

4. Storage head according to Claim 1, 2 or 3, characterized in that the helical channels have a semi-circular cross section at least at the beginning thereof and, as the length of the helices increases, this semi-circular cross section becomes increasingly flatter and the depth of the helices decreases to an ever greater extent.

5. Storage head according to Claim 1, 2, 3 or 4, characterized in that the separate streams of molten plastics material from the extruders, of which there are at least two, are initially guided via a respective substantially radially extending bore (32) into the sleeve (12) and are subsequently conveyed centrally in each case through an axial bore (22) (main stream) within the sleeve (12) and the individual helical channels then communicate via respective radially extending bores (30) (partial streams) arranged in the form of a star with the central bore (22) and are supplied with molten plastics material.

6. Storage head according to Claim 5, characterized in that the length of the respective axial bores (22) centrally in the sleeve (12) is at least as long as and preferably about three times as long as the diameter of the bore (22) itself.

7. Storage head according to Claim 5 or 6, characterized in that with at least one central bore (22), the supply of the molten plastics material from the extruder via the radially extending bore (32) (main stream) is arranged on the side facing the ejection piston (16) and the star-shaped radial bores (30) leading to the helical channels are connected on the side remote from the ejection piston (16) so the molten plastics material is guided in a direction of flow opposed to the ejection direction in this central bore (22).

8. Storage head according to one of the preceding Claims 1 to 7, characterized in that at least one of the studs (18) connected to the top of the ejection piston (16) for axial displacement of the ejection piston (16) is hollow in design and is used to supply the molten plastics material into a distributing member (20).

9. Storage head according to Claim 8, characterized in that the connection or tie between hollow stud (18) as supply line for plastics material and head region of the ejection piston (16) is designed as a universal ball joint with a universal ball joint head (48) and a universal ball joint socket (50).

10. Storage head according to one of the preceding Claims 1 to 9, characterized in that, with at least two adjacent distributing members with helical channels, the helical directions or helical courses of the helical channels differ, in other words are formed in opposite directions with right-handed and left-handed turns.

11. Storage head according to one of the preceding claims, characterized in that to form a laminated plastic tube for each layer of the preform, a distributing member with helical channels is provided which is initially supplied from at least two extruders, the ejection piston (14) being formed in several parts from concentric cylinders or lengths of tube (42, 44, 46) and a respective helical channel distributor (20) being arranged between the individual cylinders (42, 44, 46), the helices of the helical channel distributor (20) being worked into the external wall of each length of tube (42, 44, 46).

## Revendications

1. Tête accumulatrice pour machine de moulage par soufflage destinée à la fabrication en discontinu de corps creux en matière synthétique à plusieurs couches avec au moins deux extrudeuses raccordées au boîtier (10) de la tête accumulatrice pour alimenter cette dernière par au moins deux coulées de matière synthétique en fusion, qui comporte une pièce centrale (12) entourée d'au moins deux éléments distributeurs indépendants l'un de l'autre, concentriques à ladite pièce centrale, pour répartir les coulées de matière synthétique sur une surface périphérique circulaire et les acheminer vers un réservoir annulaire (16) disposé en dessous d'un piston d'expulsion (14) qui est déplaçable axialement dans le boîtier (10) de la tête accumulatrice grâce à des boulons de pression (18) et qui permet d'expulser la coulée de matière synthétique accumulée dans le réservoir (16) à travers une fente annulaire (28) d'une buse prolongeant la partie inférieure du réservoir, le piston d'expulsion (14) se composant d'au moins deux pièces cylindriques (42), (46) concentriques engagées l'une dans l'autre et pourvue chacune d'un élément distributeur différent *caractérisée en ce que* les éléments distributeurs sont constitués de conduits hélicoïdaux (20) formés dans la paroi extérieure des pièces cylindriques (42), (46) qui consituent le piston d'expulsion (14) déplaçable axialement, chaque élément distributeur comprenant au moins quatre conduits hélicoïdaux répartis régulièrement sur sa périphérie, où les conduits hélicoïdaux présentent une profondeur diminuant progressivement en direction de l'écoulement de la matière synthétique en fusion et sont alimentés individuellement par des flux parties de coulée de matière synthétique en fusion à partir d'un flux principal sortant des extrudeuses raccordées, et, où les conditions rhéologiques d'écoulement sont identiques pour toutes les particules de matière synthétique des flux partiels.

2. Tête accumulatrice selon la revendication 1 *caractérisée en ce que* la longueur axiale de chaque élément distributeur (20), respectivement des conduits hélicoïdaux individuels, est sensiblement égale à son diamètre.

3. Tête accumulatrice selon les revendications 1 ou 2 *caractérisée en ce que* les conduits hélicoïdaux sont disposés à distance l'un de l'autre, la distance axiale moyenne entre lesdits conduits correspondant sensiblement à leur largeur axiale, *en ce que* la largeur des conduits hélicoïdaux diminue lentement et progressivement sur toute leur longueur alors que la zone cylindrique située entre lesdits conduits s'accroît, respectivement s'élargit, de façon correspondante, et *en ce que* les conduits hélicoïdaux sont délimités latéralement par des bords définis, le bord inférieur, respectivement la surface cylindrique prolongeant ce dernier vers le bas, étant légèrement en retrait par rapport au bord supérieur.

4. Tête accumulatrice selon les revendications 1, 2 ou 3 *caractérisée en ce que* les conduits hélicoïdaux présentent au moins à leur commencement une section transversale en forme de demi-cercle qui s'applatit progressivement sur toute la longueur des conduits de sorte que leur profondeur diminue au fur et à mesure.

5. Tête accumulatrice selon les revendications 1, 2, 3 ou 4 *caractérisée en ce que* les flux indépendants de matière synthétique en fusion partant d'au moins deux extrudeuses coulent d'abord par un alésage (32) sensiblement radial dans la pièce centrale (12), puis avancent par un alésage axial (22) central (flux principal) à l'intérieur de la pièce centrale (12) pour alimenter ensuite les conduits hélicoïdaux indépendants par des alésages (30) (flux parties) disposés radialement en étoile et communiquant avec l'alésage central (22).

6. Tête accumulatrice selon la revendication 5 *caractérisée en ce que* la longueur de l'alésage axial correspondant (22) disposé au centre de la pièce centrale (12) est au moins égale au diamètre dudit alésage et mesure de préférence trois fois ledit diamètre.

7. Tête accumulatrice selon les revendications 5 ou 6 *caractérisée en ce que* pour au moins un alésage central (22), l'arrivée de la coulée de matière synthétique en fusion depuis l'extrudeuse par l'alésage radial (32) (flux principal) est disposée du côté du piston d'expulsion (16) et *en ce que* les alésages radiaux (30), disposés en étoile, menant vers les conduits hélicoïdaux sont raccordés sur le côté opposé audit piston d'expulsion de sorte que la coulée de matière synthétique en fusion se déplace dans l'alésage central (22) en sens opposé au sens d'expulsion.

8. Tête accumulatrice selon l'une des revendications précédentes 1 à 7 *caractérisée en ce que* au moins un des boulons de pression (18) prolongeant le piston d'expulsion vers le haut et permettant le mouvement axial dudit piston d'expulsion est creux pour permettre l'acheminement de la coulée de matière synthétique en fusion vers les éléments distributeurs (20).

9. Tête accumulatrice selon la revendication 8 *caractérisée en ce que* le raccordement entre le boulon de pression creux (18) servant de conduit d'alimentation en matière synthétique et la zone de tête du piston d'expulsion (16) est assurée par la coopération d'une tête sphérique (48) avec une coque en calotte (50).

10. Tête accumulatrice selon l'une des revendications précédentes 1 à 9 *caractérisée en ce que* l'orientation des conduits hélicoïdaux d'au moins deux éléments distributeurs voisins est opposée, les uns étant orientés l'un vers la droite et les autres vers la gauche.

11. Tête accumulatrice selon l'une des revendications précédentes 1 à 10 *caractérisée en ce que* en vue d'obtenir un tube à plusieurs couches, il est prévu pour l'obtention de chacune des couches de l'ébauche, un élément distributeur avec des conduits hélicoïdaux alimentés par au moins deux extrudeuses, le piston d'expulsion (14) en plusieurs parties étant constitué de pièces ou douilles cylindriques concentriques (42), (44), (46) entre lesquelles est disposé un élément distributeur (20) à conduits hélicoïdaux qui sont formés dans la paroi extérieure de chaque pièce cylindrique (42), (44), (46).
